# EUROPÄISCHE PATENTSCHRIFT

(11) **EP 2 311 707 B1**
(45) Veröffentlichungstag und Bekanntmachung des Hinweises auf die Patenterteilung: **29.06.2016**
(21) Anmeldenummer: 10009872.2
(22) Anmeldetag: 18.09.2010
(51) Int. Cl.: B60W 50/08, B60W 30/02, B60W 10/18, B60W 10/20, B60W 10/22, B60W 10/06, B60R 21/0132

(54) **Verfahren zum Betrieb eines Fahrerassistenzsystems in einem Kraftfahrzeug sowie zugehöriges Kraftfahrzeug**
Method for operating a driver assistance system in a motor vehicle and motor vehicle
Procédé destiné au fonctionnement d'un système d'assistance au conducteur dans un véhicule automobile ainsi que véhicule automobile correspondant

(30) Priorität: 16.10.2009 DE 102009049592
(43) Veröffentlichungstag der Anmeldung: 20.04.2011
(73) Patentinhaber: Audi AG, 85045 Ingolstadt (DE)
(72) Erfinder: Freyer, Jörn, Dr., 81827 München (DE); Brenneis, Oliver, 85748 Garching (DE); Hantschke, Christopher, 85080 Gaimersheim (DE); Kastl, Andreas, 85092 Kösching (DE); Schindler, Andreas, 85139 Wettstetten (DE); Stadel, Benjamin, 85051 Ingolstadt (DE); Ullmann, Stefan, 80797 München (DE)
(74) Vertreter: Thielmann, Frank

(56) Entgegenhaltungen:
- EP-A2- 0 473 866
- EP-A2- 0 984 260
- WO-A1-2008/043852
- DE-A1- 10 103 401
- DE-A1- 10 231 556
- DE-A1-102004 062 496
- DE-A1-102005 035 624
- DE-A1-102008 052 989
- US-A1- 2001 012 976

## Beschreibung

Die Erfindung betrifft ein Verfahren zum Betrieb eines Fahrerassistenzsystems, insbesondere Unfallvermeidungssystems, in einem Kraftfahrzeug sowie ein zugehöriges Kraftfahrzeug.

Die meisten bekannten heutigen Sicherheitssysteme im Kraftfahrzeug unterstützen den Fahrer in kritischen Situationen. Solcherlei Systeme reagieren beispielsweise dann, wenn sich das Kraftfahrzeug bereits in einer kritischen Situation befindet, wie dies beispielsweise bei ESP-Systemen (elektronisches Stabilitätsprogramm) der Fall ist.

Solche kritischen Situationen werden üblicherweise durch den sogenannten physikalischen Grenzbereich beschrieben. Der physikalische Grenzbereich gibt letztlich an, ab wann die Kontrolle über das Kraftfahrzeug verloren gehen kann, das bedeutet, er gibt an, was das Kraftfahrzeug in einer aktuellen Situation tatsächlich zu leisten in der Lage ist. Der physikalische Grenzbereich ist eine variable, also situationsabhängige Größe und hängt im Wesentlichen von der technischen Ausstattung und dem Zustand des Kraftfahrzeugs, der Straßenbeschaffenheit, dem Straßenverlauf und der Witterung (Nässe, Glätte, etc.) ab.

Dem Fahrer obliegt in heutigen Kraftfahrzeugen die Aufgabe, durch die Wahl der Fahrtroute und der von ihm beeinflussbaren Fahrzustandsgrößen sein Kraftfahrzeug zu bewegen. Durch Lenk-, Gas- und Bremsbefehle steuert er sein Fahrzeug idealerweise so, dass er sich innerhalb des physikalischen Grenzbereiches bewegt, ohne die Kontrolle über das Fahrzeug zu verlieren und sich in Gefahr zu begeben.

Der tatsächliche Bereich, in welchem sich der Fahrer sicher mit dem Kraftfahrzeug bewegen kann, der sogenannte individuelle Grenzbereich in Abhängigkeit von Fahrzeug, Fahrsituation, Witterung etc., wird innerhalb des physikalischen Grenzbereichs üblicherweise erheblich vom fahrerischen Können des Fahrzeugführers, seinem Gefühlszustand und seiner Aufmerksamkeit bestimmt. Für den Fahrer stellt sich somit die Aufgabe, sowohl den physikalischen Grenzbereich, also die Leistungsfähigkeit des Kraftfahrzeugs in der aktuellen Situation, als auch sein fahrerisches Können richtig einzuschätzen, um das Fahrzeug sicher führen zu können.

Besonders Fahranfänger überschätzen ihr Können und den physikalischen Grenzbereich häufig, wodurch das Risiko von Unfällen besteht, wenn dann tatsächlich die Kontrolle über das Kraftfahrzeug verloren geht. Insbesondere bei schlechter Witterung (Nässe, Glätte, usw.) zeigt sich, dass es selbst dem aufmerksamen und geübten Fahrer besonders schwer fällt, den individuellen oder auch den physikalischen Grenzbereich richtig einzuschätzen, wodurch durch unangepasste Geschwindigkeit und Fahrweise eine potentielle Gefahrensituation entstehen kann. Statistiken belegen, dass eine unangepasste Fahrweise eine wesentliche Unfallursache darstellt.

DE 10 2005 035 624 A1 betrifft ein Verfahren und eine Vorrichtung zur Bereitstellung von fahrstreckenabhängigen Fahranweisungen. Es geht um Grenzbedingungen für ein verbrauchs- und/oder verschleißoptimiertes Durchfahren des vor dem Kraftfahrzeug liegenden Bereichs der zu durchfahrenden Fahrstrecke, wobei mindestens eine fahrstreckenabhängige verbrauchs- und/oder verschleißrelevante Fahranweisung erzeugt wird, wenn der aktuelle Fahrzustand die mindestens eine Grenzbedingung nicht erfüllt. Die Fahranweisungen sind dabei fest bestimmten Bereichen der zu durchfahrenden Fahrstrecke zugeordnet. Es geht also darum, einem Fahrer in Ankopplung an die zu durchfahrende Fahrstrecke Anweisungen zu geben, wie er möglichst verbrauchs- und/oder verschleißoptimiert fährt.

EP 0 984 260 A2 betrifft ein Verfahren zur Analyse und zur Beeinflussung des Fahrverhaltens von Kraftfahrzeugen. Aus verschiedenen Messwerten, wie etwa den einzelnen Raddrehzahlen, der Querbeschleunigung und dem Drehwinkel über die Hochachse kann ermittelt werden, inwieweit sich das Kraftfahrzeug in dem Grenzbereich der Kontrollierbarkeit (physikalischer Grenzbereich) befindet. Hieraus kann der Grad der Fahrzeugbeherrschung durch den Fahrer, mithin sein persönlicher Grenzbereich, abgeleitet werden, so dass ein bestimmter Maximalwert definiert werden kann, bei dem im Allgemeinen ein ausreichender Sicherheitsabstand zu kritischen Situationen besteht. Es wird hervorgehoben, dass es besonders vorteilhaft sei, dass der erfahrene und das Fahrzeug gut beherrschende Fahrer durch diese Warnung vor kritischen Situationen erst deutlich später gewarnt wird als der unerfahrene Fahrer.

Der Erfindung liegt daher die Aufgabe zugrunde, ein Verfahren zur Steuerung eines Fahrerassistenzsystems anzugeben, das dem Fahrer eine verbesserte Einschätzung der Grenzbereiche, insbesondere des individuellen und/oder des physikalischen Grenzbereichs, erlaubt.

Zur Lösung dieser Aufgabe ist bei einem Verfahren der eingangs genannten Art erfindungsgemäß vorgesehen, dass aus technischen Daten des Kraftfahrzeugs, den aktuellen Fahrzustand beschreibenden Messdaten, die Straßenbeschaffenheit beschreibenden Messdaten und die Umgebung des Kraftfahrzeugs, insbesondere den Straßenverlauf, beschreibenden Daten wenigstens ein den aktuellen physikalischen Grenzbereich des Kraftfahrzeugs beschreibender Grenzwert einer Fahrzustandsgröße sowie ein daraus abgeleiteter, innerhalb des physikalischen Grenzbereichs liegender Warnwert ermittelt wird, wobei der aktuelle Wert der wenigstens einen Fahrzustandsgröße ermittelt wird und bei zwischen dem Warnwert und dem Grenzwert liegender Fahrzustandsgröße eine Warnung an einen Fahrer ausgegeben wird, wobei ein allgemeiner, den physikalischen Grenzbereich des Kraftfahrzeugs unter Normbedingungen beschreibender Normgrenzwert ermittelt und/oder vorgegeben wird, wobei der aktuelle Grenzwert durch Skalierung mit einem die aktuelle Fahrsituation beschreibenden Skalierungswert ermittelt wird.

Erfindungsgemäß wird also zunächst vorgeschlagen, ständig den aktuellen physikalischen Grenzbereich des Kraftfahrzeugs zu ermitteln und zu überwachen. Dieser wird vorliegend bezüglich einer oder mehrerer Fahrzustandsgrößen bestimmt. In diesem Zusammenhang gibt er einen Grenzwert für die Fahrzustandsgröße an, bei dessen Überschreitung die Kontrolle über das Kraftfahrzeug verloren geht, also der physikalische Grenzbereich verlassen wird. Wie bereits einleitend diskutiert, kann der physikalische Grenzbereich - neben den fest vorgegebenen technischen Daten des Kraftfahrzeugs, die die technische Ausstattung beschreiben - aufgrund des aktuellen Fahrzustands, der Straßenbeschaffenheit und der Umgebung des Kraftfahrzeugs ermittelt werden, wozu entsprechende Daten, beispielsweise Messdaten und/oder Daten anderer Fahrzeugsysteme, berücksichtigt werden.

Die grundlegende Idee des erfindungsgemäßen Verfahrens ist es nun, den Fahrer bereits bei der Annäherung an den den physikalischen Grenzbereich beschreibenden Grenzwert zu warnen. Daher wird erfindungsgemäß aus dem aktuellen Grenzwert auch ein Warnwert abgeleitet, beispielsweise in einem bestimmten Abstand zum Grenzwert innerhalb des physikalischen Grenzbereichs oder als ein prozentualer Anteil des Grenzwertes. Hierdurch wird zwischen dem Warnwert und dem Grenzwert ein Warnbereich definiert, in dem es durchaus noch möglich ist, eine kritische Situation abzuwenden, so dass die Kontrolle über das Kraftfahrzeug noch nicht verloren ist. In einer farblichen Symbolik bedeutet dies, dass noch nicht unbedingt eine kritische Situation ("rot") vorliegt, sondern lediglich eine potentielle Gefahrensituation ("orange") gegeben ist, wenn sich der aktuelle Wert der Fahrzustandsgröße in dem durch den Warnwert und den Grenzwert beschriebenen Bereich befindet. Ist dies nach Ermittlung des aktuellen Werts der Fahrzustandsgröße tatsächlich der Fall, so wird eine Warnung an einen Fahrer ausgegeben. Der Fahrer wird also darauf hingewiesen, dass er sich dem Bereich nähert, ab dem die Kontrolle über das Kraftfahrzeug verloren gehen kann bzw. eine kritische Situation aufgrund der physikalischen Gegebenheiten nicht mehr zu vermeiden ist. Auf diese Weise wird beim Fahrer vorteilhafterweise ein Bewusstsein für diese Beschränkungen entwickelt, so dass letztlich Fehleinschätzungen und Fehlreaktionen des Fahrers bei der Bewältigung von Fahraufgaben bereits vor Eintritt einer kritischen Situation, insbesondere eines Kontrollverlusts, vermieden werden können.

Dem Fahrer wird also die Annäherung an die Grenzwerte zur Kenntnis gebracht und er wird auf potentielle Gefahrensituationen hingewiesen. Hierdurch wird der Fahrer bei der Bewältigung von (schwierigen) Fahraufgaben unterstützt und entlastet und es wird das Risiko von tatsächlichen Gefahrensituationen und Unfällen deutlich reduziert. Dies alles wird über die Orientierung an objektiv an der Leistungsfähigkeit des Kraftfahrzeugs in der aktuellen Fahrsituation beschreibenden Grenzwerten erreicht.

In einer besonders vorteilhaften Ausgestaltung des erfindungsgemäßen Verfahrens kann als fahrerspezifischer Warnwert ein den individuellen Grenzbereich eines Fahrers beschreibender Grenzwert der Fahrzustandsgröße ermittelt werden. Bei dieser Ausgestaltung wird demnach auch das individuelle Fahrkönnen des Fahrers mitberücksichtigt, wenn es um den Zeitpunkt der Warnung geht. Auf diese Weise können Fahrer mit einem geringeren Fahrkönnen, beispielsweise Fahranfänger, früher gewarnt werden, da sie häufig sowohl den physikalischen Grenzbereich als auch ihren individuellen Grenzbereich aufgrund mangelnder Erfahrung falsch einschätzen und sich damit bislang unwissentlich in Gefahr begeben. Dem kann durch das erfindungsgemäße Verfahren durch frühzeitige Warnung und frühzeitige Hinweise auf potentielle Gefahrensituationen abgeholfen werden. Zudem werden Fahrer mit einem hohen Fahrkönnen, die derartige Situationen vermutlich sehr gut einschätzen können, nicht zu früh durch Warnungen belastet. Es hat sich gezeigt, dass die wenigsten Fahrer die tatsächlichen physikalischen Möglichkeiten eines Kraftfahrzeugs auch ausnutzen oder ausnutzen können. Dieser Effekt wird entsprechend berücksichtigt. Zur Ermittlung des den individuellen Grenzbereich eines Fahrers beschreibenden Grenzwerts der Fahrzustandsgröße kann vorgesehen sein, dass der fahrerspezifische Warnwert unter Berücksichtigung einer statistischen Auswertung von Ermittlungen der Fahrzustandsgröße ermittelt wird und/oder unter Berücksichtigung einer das Fahrkönnen des Fahrers beschreibenden Eingabe ermittelt wird. Es ist also zum einen denkbar, dass Fahrer, beispielsweise wenn sie im Kraftfahrzeug Platz nehmen, oder eine Drittperson Eingaben über das Fahrkönnen des aktuellen Fahrers machen. Beispielsweise können verschiedene Stufen ausgewählt werden, insbesondere Fahranfänger, normaler Fahrer und Profi oder dergleichen. Soll das Fahrkönnen für jeden Fahrer gespeichert werden, was insbesondere bei der statistischen Auswertung zweckmäßig ist, ist es notwendig, den Fahrer vor oder bei Antritt der Fahrt zu identifizieren.

So kann vorgesehen sein, dass der Fahrer vor Beginn einer Fahrt identifiziert wird, insbesondere durch Eingabe einer Authentifizierungsinformation. Hierbei sind verschiedene Varianten denkbar, über die sich der Fahrer selbst identifiziert oder vom Kraftfahrzeug selbsttätig identifiziert werden kann. Beispielsweise kann vorgesehen sein, dass der Fahrer einen persönlichen Identifizierungscode, beispielsweise eine Zahlenkombination, an einem Bordcomputer eingibt. Vorteilhaft ist auch denkbar, dass der Fahrer über einen personifizierten Schlüssel erkannt werden kann. Auch ein Fingerabdrucksensor oder eine Identifikation über eine Chipkarte oder ein sonstiges Medium liegen im Rahmen der vorliegenden Erfindung, zusätzlich oder alternativ kann eine Innenraumkamera mit einer entsprechenden Bildverarbeitung verwendet werden, um einen Fahrer zu identifizieren. Zweckmäßigerweise kann die Identifikation des Fahrers mit einem allgemeinem Profil des Fahrers verknüpft sein, indem beispielsweise seine bevorzugten Einstellungen bezüglich des Sitzes, der Bedieneinrichtungen, des Lenkrads, der Anzeigen und dergleichen enthalten sind. Eine derartige Einstellung auf den aktuellen Fahrer wird häufig auch als "Memo-Funktion" bezeichnet.

Wie bereits erwähnt, kann das Fahrkönnen des Fahrers auch durch das Kraftfahrzeug selbst ermittelt werden, wobei insbesondere eine kontinuierliche Überwachung der Fahrtätigkeit vorgenommen werden kann. Das Kraftfahrzeug selbst beurteilt also anhand der Fahrtätigkeit des Fahrers in verschiedenen Fahrsituationen, wie es um das Fahrkönnen des Fahrers bestellt ist, wobei das Fahrverhalten des Fahrers beschreibende Messdaten aufgenommen und bewertet werden können, beispielsweise durch Vergleich mit Referenzwerten und/oder erlaubten Intervallen. Eine solche Bewertung gibt einen Hinweis darauf, wie sich der Fahrer in der aktuellen, untersuchten Fahrsituation verhalten hat und somit auch sein Fahrkönnen. Ein solcher allgemeiner, beispielsweise als Punktewert vorhandener, das Fahrkönnen des Fahrers angebender Evaluationswert kann genutzt werden, um den fahrerspezifischen Warnwert für die aktuelle Fahrsituation zu ermitteln.

Denkbar ist jedoch auch, im Rahmen der bereits erwähnten statistischen Auswertung, direkt die Fahrzustandsgröße, die betrachtet werden soll, zu beobachten. Während dann also der Grenzwert des physikalischen Grenzbereichs angibt, wie viel das Kraftfahrzeug an sich leisten kann, wird beobachtet, wie viel dieser Leistung der Fahrer üblicherweise ausnutzt oder auszunutzen bereit/fähig ist. Ein sich ergebender Mittelwert oder ein anderer statistisch ermittelter, kennzeichnender Wert, können dabei unmittelbar als Warnwert genutzt werden, denkbar ist es jedoch auch, von einem solchen Mittelwert oder anderem kennzeichnenden Wert etwas abzuziehen oder diesen zu skalieren, um die Warnung noch frühzeitiger erhalten zu können. Beliebige Möglichkeiten sind hier denkbar, um einen aussagekräftigen, den individuellen Grenzbereich des Fahrers optimal berücksichtigenden Warnwert zu erhalten.

Zur Ermittlung des Grenzwerts und/oder des aktuellen Werts der Fahrzustandsgröße und/oder des aktuellen Warnwerts können Daten eines Navigationssystems und/oder wenigstens eines Fahrbahnsensors und/oder eines Reibwertsensors und/oder wenigstens eines Umfeldsensors und/oder einer Kraftfahrzeug-zu-Kraftfahrzeug-Kommunikationseinrichtung (car to car-Kommunikation) und/oder wenigstens eines Fahrzeugsystems, insbesondere Fahrwerkregelsystems und/oder Fahrerassistenzsystems und/oder Steuergeräts, und/oder von Beschleunigungssensoren berücksichtigt werden.

So kann beispielsweise vorgesehen sein, dass die Ermittlung des physikalischen Grenzbereichs bzw. des diesen beschreibenden Grenzwerts in zwei Stufen erfolgt. In einer ersten Stufe wird der physikalische Grenzbereich unabhängig von Umgebungsobjekten, aber abhängig vom Untergrund und/oder von der Haftung ermittelt. Hierzu kann beispielsweise der aktuelle Reibwert zwischen der Fahrbahn, insbesondere auch der kommenden Fahrbahn, und den Reifen sensiert werden, beispielsweise durch eine geeignete Sensorik im Reifen oder auch durch Fahrbahnsensoren. In dieser ersten Stufe wird also der physikalische Grenzbereich eines Kraftfahrzeugs auf dem aktuellen Untergrund, der sich in alle Richtungen ins Unendliche erstreckt, betrachtet, ähnlich wie dies beispielsweise ein Fahrwerkregelsystem wie ESP tut. Neben dem Untergrund, auf dem das Kraftfahrzeug fährt, ist folglich in der ersten Stufe auch die Quer-, Längs- und Vertikaldynamik des Kraftfahrzeugs relevant, die beispielsweise über die vorhandene Sensorik eines Fahrwerkregelsystem-Steuergerätes, beispielsweise eines ESP-Steuergerätes, oder auch über zusätzliche Sensoren ermittelt werden kann.

In der zweiten Stufe werden dann auch Umweltbedingungen berücksichtigt, beispielsweise Witterungsbedingungen, anderen Kraftfahrzeuge, Objekte außerhalb der Fahrbahn (Leitplanken etc.), so dass die Rahmenbedingungen letztlich enger gefasst werden können. Auch der Fahrbahnverlauf kann dabei berücksichtigt werden, wenn beispielsweise die gewünschte Fahrtroute bzw. der Fahrbahnverlauf, insbesondere dreidimensional, über das Navigationssystem gewonnen wird. Informationen über den Fahrbahnzustand und die Verkehrssituation auf der Route können durch Fahrbahnsensoren, Fahrzeugzu-Fahrzeug-Kommunikation, Umfeldüberwachungssensorik und Informationsverteilsysteme gewonnen werden. Relevant können beispielsweise die Witterungsverhältnisse, Stau- und Gefahrenmeldungen sowie die Trajektorien benachbarter Verkehrsteilnehmer sein. Zudem kann die unmittelbare Fahrzeugumgebung mittels Umfeldsensoren, beispielsweise Radarsensoren oder Kameras, erfasst werden. Berücksichtigt werden können ferner alle mit dem Fahrerwunsch im Zusammenhang stehenden Daten, beispielsweise der vorgegebene Lenkwinkel, die Betätigung der Pedalerie und dergleichen.

Selbstverständlich können die genannten Sensoren und Systeme auch Daten liefern, die in die Ermittlung des Warnwerts eingehen können, beispielsweise im Sinne der oben bereits diskutierten Ermittlung des individuellen Grenzbereichs des Fahrers. Zusätzlich kann mit besonderem Vorteil auch vorgesehen sein, dass bei der Ermittlung des aktuellen Warnwerts ein die Aufmerksamkeit des Fahrers beschreibender Wert berücksichtigt wird. Dann kann also auch beachtet werden, ob der Fahrer mit der üblichen Aufmerksamkeit auf die Fahraufgabe konzentriert ist, so dass bei einem unaufmerksamen Fahrer beispielsweise früher gewarnt werden kann als bei einem sehr aufmerksamen Fahrer. Dies kann beispielsweise ergänzend zu einem ohnehin individuellen Warnwert verwendet werden, um auch den aktuellen Fahrerzustand berücksichtigen zu können.

Als Fahrzustandsgröße kann im Rahmen des erfindungsgemäßen Verfahrens beispielsweise die Geschwindigkeit und/oder der Lenkwinkel und/oder die Längsbeschleunigung und/oder die Querbeschleunigung des Kraftfahrzeugs betrachtet werden. Werden beispielsweise die Längsbeschleunigung und die Querbeschleunigung des Kraftfahrzeugs betrachtet, so kann das Konzept des Kammschen Kreises betrachtet werden. Der Kammsche Kreis (der im Übrigen üblicherweise kein perfekter Kreis, sondern je nach Kraftfahrzeug individuell geformt ist), beschreibt den physikalischen Grenzbereich des Kraftfahrzeugs in einer Ebene, die von der Längsbeschleunigung und der Querbeschleunigung gebildet wird. Den individuellen Grenzbereich des Fahrers kann man sich nun beispielsweise als weiteren, innerhalb des Kammschen Kreises liegenden "Kreis" vorstellen. Der Raum zwischen den beiden genannten Kurven ist dann der Warnbereich im Sinne der vorliegenden Erfindung.

An dieser Stelle seien bereits einige Anwendungsgebiete der vorliegenden Erfindung näher diskutiert. Zunächst seien als Anwendungsfall besondere Zustände der Fahrbahn genannt, sei es durch Verschmutzung oder dergleichen, oder aber auch durch Wettereffekte wie Schnee, Regen oder Blitzeis eingeschränkte Fahrtmöglichkeiten. Wird ein solcher Fahrbahnzustand - beispielsweise durch Fahrbahnsensoren oder durch Detektion eines niedrigen Reibwerts - festgestellt, kann dem Fahrer nach Ermittlung des entsprechenden physikalischen Grenzbereiches beispielsweise die Information gegeben werden, dass seine Geschwindigkeit eher zu hoch ist, er also den Straßenzustand gegebenenfalls falsch eingeschätzt hat. Auch Daten aus dem Navigationssystem können beispielsweise genutzt werden, wenn beispielsweise Stellen passiert werden, an denen häufig die Fahrbahn verschmutzt ist, beispielsweise Ausfahrten einer Kiesgrube oder von Feldwegen, auf denen Traktoren zu verkehren pflegen. Dann kann insbesondere als zusätzliche Ausgestaltung bereits im Voraus ein Hinweis darauf erfolgen, dass der physikalische und/oder der individuelle Grenzbereich des Fahrers dort kleiner sind. Auch andere Umgebungsbedingungen können beispielsweise mit einbezogen werden, beispielsweise Wildwechselzonen, wo eine ständige Bremsbereitschaft und niedrigere Geschwindigkeiten anzuraten sind, oder auch Nebelbereiche. Eine weitere zusätzliche vorausschauende Einschätzung ist beispielsweise auch bezüglich der sogenannten "Windfalle" bei Brücken möglich, wenn die dortigen Windbedingungen ermittelt werden und die Auswirkungen auf die Grenzbereiche entsprechend berücksichtigt werden. Informationen über den weiteren Streckenverlauf können beispielsweise auch über die Kraftfahrzeug-zu-Kraftfahrzeug-Kommunikation erhalten und berücksichtigt werden.

Ein weiteres breites Anwendungsgebiet der vorliegenden Erfindung sind insbesondere auch Kurvensituationen, also hauptsächlich das Lenkverhalten des Fahrers in Kurven. Hier kommt im Übrigen auch der bereits erwähnte Kammsche Kreis zum Tragen. Es kann nicht nur beobachtet werden, wie ein Fahrer grundsätzlich eine Kurve nimmt, um daraus den individuellen Grenzbereich und hieraus folgend den fahrerspezifischen Warnwert zu bestimmen, durch Vergleich mit den maximal vom Kraftfahrzeug leistbaren Kurvenfahrten, wie sie beispielsweise durch den Kammschen Kreis beschrieben werden können, kann frühzeitig eine Warnung gegeben werden, die beispielsweise ein Schleudern oder dergleichen verhindern kann.

Als weiteres Beispiel seien Überholsituationen genannt, wo beispielsweise bei bekanntem Gegenverkehr oder eine bald folgenden Kurve, welche Informationen beispielsweise aus einem Navigationssystem stammen kann, ermittelt werden kann, ob das Fahrzeug selber aufgrund seiner dynamischen Fähigkeiten noch in der Lage ist, einen Überholvorgang sicher abzuschließen, bzw. im Hinblick auf den individuellen Grenzbereich, ob dies im Können des Fahrers liegt. Auch hier können dann frühzeitig Warnungen ausgegeben werden.

Es ist vorgesehen, dass ein allgemeiner, den physikalischen Grenzbereich des Kraftfahrzeugs unter Normbedingungen beschreibender Normgrenzwert ermittelt und/oder vorgegeben wird, wobei der aktuelle Grenzwert durch Skalierung mit einem die aktuelle Fahrsituation beschreibenden Skalierungswert ermittelt wird. Analog kann zusätzlich vorgesehen sein, dass auch ein auf Normbedingungen bezogener Normwarnwert mit dem Skalierungswert skaliert wird. Es können folglich Normbedingungen definiert werden, beispielsweise der physikalische Grenzbereich des Fahrzeugs auf trockenem Asphalt oder dergleichen. Beispielsweise kann vorgesehen sein, wenn Längsbeschleunigung und Querbeschleunigung betrachtet werden, dass beispielsweise der grundlegende Kammsche Kreis für einen trockenen Asphalt (vgl. die oben definierte Stufe 1) betrachtet wird. Entsprechend den Abweichungen von diesem trockenen Asphalt wird dann der Skalierungsfaktor aufgrund der entsprechenden ermittelten Daten bestimmt, so dass daraus der tatsächliche aktuelle Grenzwert ermittelt werden kann. So kann beispielsweise vorgesehen sein, dass der Skalierungsfaktor unter Berücksichtigung von die aktuelle Witterung und/oder den Reifenzustand und/oder die Reifentemperatur und/oder die Zuladung und/oder den Reibwert und/oder andere Umgebungsbedingungen beschreibenden Daten ermittelt wird. Dies soll anhand des bereits beschriebenen Beispiels des Kammschen Kreises nochmals näher erläutert werden. Gilt der die Normgrenzwerte angebende Kammsche Kreis beispielsweise für trockenen Asphalt und ist innerhalb dieses Kammschen Kreises auch eine Kurve für die Normwarnwerte definiert, ist der Skalierungsfaktor für trockenen Asphalt 1. Ist der Asphalt aber beispielsweise verschmutzt oder durch Eis oder dergleichen glatt, so wird ein Skalierungsfaktor verwendet, mit dem sowohl der Kammsche Kreis als auch die den individuellen Grenzbereich des Fahrers angebende Kurve so multipliziert werden, dass beide Grenzbereiche einander entsprechend eingeengt werden, um die schwierigere Handhabbarkeit des Kraftfahrzeugs auf diesem Untergrund direkt wiederzugeben. Dabei können eine Vielzahl von Parametern bzw. Daten berücksichtigt werden, wobei der Skalierungswert aus diesen Daten berechnet oder auch beispielsweise mittels einer Look-Up-Tabelle bestimmt werden kann. Obwohl als Beispiel hier besonders die Betrachtung der Längsbeschleunigung und der Querbeschleunigung als Fahrzustandsgrößen diskutiert wurde, lässt sich dieses Konzept selbstverständlich auch auf andere oder mehr Fahrzustandsgrößen übertragen.

Zweckmäßigerweise kann die Warnung in Abhängigkeit des Abstandes zwischen dem Grenzwert und dem aktuellen Wert der Fahrzustandsgröße verändert werden. Je näher man folglich dem physikalischen Grenzbereich kommt, desto intensiver oder eindringlicher kann die Warnung ausfallen. Auf diese Weise wird verhindert, dass die Warnung beispielsweise übersehen wird oder dergleichen. Zudem wird dem Fahrer deutlich bewusst gemacht, inwieweit er sich dem entsprechenden Grenzwert bzw. den entsprechenden Grenzwerten annähert.

Die Warnung kann über ein akustisches und/oder optisches und/oder haptisches und/oder olfaktorisches Ausgabemittel, insbesondere über ein Head-Up-Display, ausgegeben werden. Beliebige Ausgabemittel, wie sie teilweise ohnehin in Kraftfahrzeugen vorgesehen sind, können zur Ausgabe der Warnung verwendet werden, beispielsweise Lautsprecher, Bildschirme, eine Vibration des Lenkrades oder dergleichen. Als besonders vorteilhaft hat sich ein Head-Up-Display, insbesondere ein kontaktanaloges Head-Up-Display, erwiesen, insbesondere dann, wenn, wie im Folgenden noch diskutiert werden wird, die Warnung auch eine Information zur Beseitigung des potentiellen Gefahrenzustands umfasst.

Mit besonderem Vorteil kann die Warnung auch eine Information zur Beseitigung des potentiellen Gefahrenzustands umfassen. Der Fahrer wird also nicht nur darauf hingewiesen, dass er sich in einem "orangen" Bereich nahe der Grenze des physikalischen Grenzbereichs befindet, sondern ihm werden auch gleich Anweisungen mit auf den Weg gegeben, wie er wieder in den "grünen", sicheren Bereich zurückkommen kann. Beispielsweise können Beschleunigungen oder Reduzierungen der Geschwindigkeit, bestimmte Lenkwinkel, Bremsvorgänge oder dergleichen nahegelegt werden. Mit besonderem Vorteil ist dies bei einem kontaktanalogen Head-Up-Display möglich, wo dem Fahrer unmittelbar Anweisungen, beispielsweise Lenkrichtungen, übermittelt werden können, die bereits vor Erreichen einer tatsächlich kritischen Situation die potentielle Gefahrensituation entschärfen können. Bei der Ermittlung dieser Anweisungen kann auch das individuelle Fahrkönnen des Fahrers bzw. sein individueller Grenzbereich berücksichtigt werden, mithin, ob dieser zu den entsprechenden Handlungen fähig wäre.

Es sei an dieser Stelle angemerkt, dass es selbstverständlich auch möglich ist, beliebige weitere Informationen in die Warnung zu integrieren. Beispielsweise kann dem Fahrer auch visuell dargestellt werden, wie nah er tatsächlich an den Grenzwert herankommt, so dass dieser die Erfahrungen aufnehmen und in seinem Erfahrungsschatz erhalten kann, was das zukünftige Fahrkönnen des Fahrers positiv beeinflusst.

Dem Fahrer kann also, wie gerade beschrieben, auch ein Weg nahegelegt werden, die potentielle Gefahrensituation zu entschärfen, oder er wird von alleine nach einer Sicherung des Fahrzustandes suchen. Wird eine Warnung ausgegeben, ist also eine bestimmte Reaktion des Fahrers antizipierbar, d. h., es können mit besonderem Vorteil die Fahrzeugsysteme auf die bevorstehenden Handlungen des Fahrers vorkonditioniert werden, um ein möglichst schnelles Verlassen des potentiellen Gefahrenbereichs erst zu ermöglichen. So kann vorgesehen sein, dass bei Ausgabe einer Warnung auch eine Anpassung wenigstens eines Parameters wenigstens eines anderen Fahrzeugsystems im Hinblick auf eine fahrerinitiierte Beseitigung des potentiellen Gefahrenzustands und/oder auf eine Erhöhung der Sicherheit erfolgt. Im Hinblick auf eine fahrerinitiierte Beseitigung des potentiellen Gefahrenzustands, also des fahrerinitiierten Verlassens des Warnbereichs, kann beispielsweise eine Momentenunterstützung und/oder Übersetzung der Lenkung (und damit indirekt beispielsweise eine Dämpfung der Lenkung) verändert werden und/oder die Auslöseschwelle eines Bremsassistenten verändert, insbesondere erniedrigt, werden und/oder das Lüftspiel der Bremsen verringert werden und/oder das Fahrwerk des Kraftfahrzeugs auf einen der Situation angepassten, beispielsweise härteren, komfortableren oder weicheren, Fahrstil umgestellt werden. Es können also beispielsweise notwendige Fahreingriffe durch Verarbeitung aller genannten Informationen vorausgesagt werden und es kann eine Anpassung von Fahrzeugsystemen, insbesondere von aktiven Fahrwerksystemen, im Hinblick auf diese zu erwartenden Maßnahmen erfolgen. So können beispielsweise Federung, Dämpferregelung und dergleichen angesprochen werden, um die Fahreingriffe für den Fahrer einfacher und sicherer zu gestalten.

Bezüglich des Sicherheitsaspekts kann vorgesehen sein, dass aktive Rückhaltesysteme, insbesondere Gurtstraffer und/oder Kopfstützen und/oder Sitze, zur Erhöhung der Sicherheit angesteuert werden. Doch auch andere Sicherheitssysteme, beispielsweise Airbags oder dergleichen, können in einen Modus geschaltet werden, der die vorliegende latente Gefahr berücksichtigt. So ist, selbst wenn eine kritische Situation eintritt, wenigstens für eine erhöhte Sicherheit des Fahrers gesorgt.

In weiterer Ausgestaltung des erfindungsgemäßen Verfahrens kann auch vorgesehen sein, dass bei Ausgabe einer Warnung seitens des Fahrerassistenzsystems ein eigenständiger oder unterstützender, aktiver, auf die Beseitigung des potentiellen Gefahrenzustands gerichteter Fahreingriff vorgenommen wird, insbesondere durch Ansteuerung der Bremsen und/oder der Lenkung und/oder des Gaspedals. In dieser Ausgestaltung ist das erfindungsgemäße Fahrerassistenzsystem bzw. sein Steuergerät selbst dazu ausgebildet, die potentielle Gefahrensituation zu beseitigen. Es erfolgt also eine Berechnung der notwendigen Fahrzeugreaktionen, wobei die Beeinflussung der potentiellen Gefahrensituation eine aktive Ansteuerbarkeit von Gas, Lenkung, Bremse sowie weiteren Fahrzeugparametern erfordert. Will der Fahrer beispielsweise auf einer glatten Fahrbahn zu schnell fahren, realisiert das System die potentielle Gefahrensituation, warnt den Fahrer vor dem Überschreiten des Grenzbereiches, insbesondere über ein Head-Up-Display oder das Fahrerinformationssystem, und greift, insbesondere durch Absenkung der Geschwindigkeit, frühzeitig zur Entschärfung der Situation ein. Dabei wird der Fahrer stets über den Vorgang informiert, um ihm die Notwendigkeit zu verdeutlichen. Neben der Wahl einer unkritischen Geschwindigkeit kann im erfindungsgemäßen Verfahren auch vorgesehen sein, den Fahrer beim Einhalten des Sicherheitsabstandes, dem richtigen Lenkbefehl und der Bewältigung von Vorfahrtssituationen zu assistieren. Beliebige Möglichkeiten sind hier denkbar. Eine solche Funktionalität kann allerdings auch für den Fahrer aktivierbar und/oder deaktivierbar ausgestaltet werden, da nicht jeder Fahrer derartige Fahreingriffe durch ein Fahrerassistenzsystem wünscht.

Neben dem erfindungsgemäßen Verfahren betrifft die Erfindung auch ein Kraftfahrzeug, umfassend ein Fahrerassistenzsystem mit einem Steuergerät, welches zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, welches mithin auch eine deutliche Erhöhung des Sicherheitsniveaus im Kraftfahrzeug ermöglicht.

Das Steuergerät ist dabei dazu ausgebildet, eine Vielzahl von ihm übergebenen Daten, beispielsweise technische Daten des Kraftfahrzeugs, den aktuellen Fahrzustand beschreibende Messdaten, die Straßenbeschaffenheit beschreibende Messdaten und die Umgebung des Kraftfahrzeugs, insbesondere den Straßenverlauf, beschreibende Daten, im Rahmen einer Informationsfusion zu verknüpfen, um wenigstens einen den aktuellen physikalischen Grenzbereich des Kraftfahrzeugs beschreibenden Grenzwert einer Fahrzustandsgröße sowie einen daraus abgeleiteten, innerhalb des physikalischen Grenzbereichs liegenden Warnwert zu ermitteln. Zudem ist das Steuergerät zur Ermittlung des aktuellen Werts der wenigstens einen Fahrzustandsgröße, beispielsweise über Daten von Sensoren, ausgebildet. Liegt der aktuelle Wert der Fahrzustandsgröße zwischen dem Warnwert und dem Grenzwert, so wird eine Warnung über ein entsprechendes Ausgabemittel an einen Fahrer ausgegeben.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug, und
- Fig. 2: eine Skizze zum erfindungsgemäßen Verfahren.

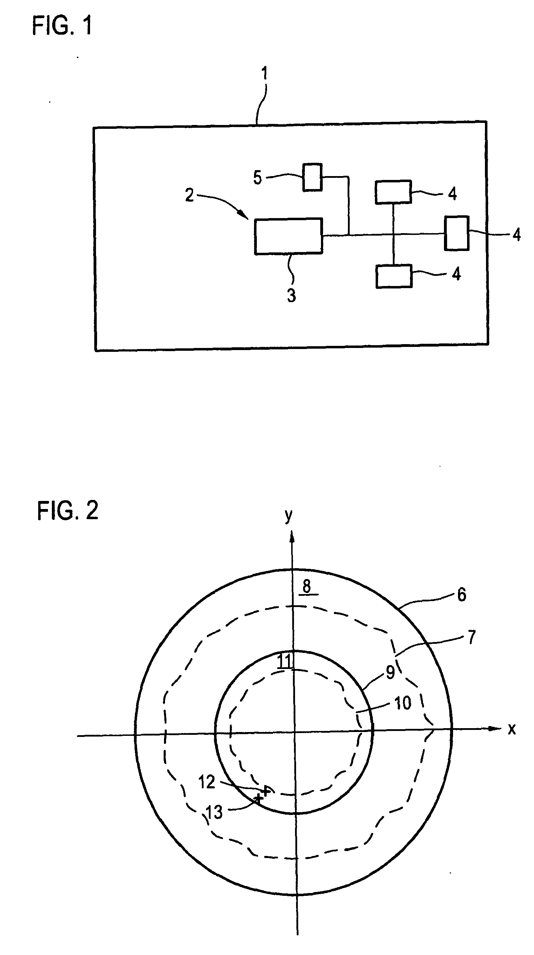

Fig. 1 zeigt ein erfindungsgemäßes Kraftfahrzeug 1. Es umfasst ein Fahrerassistenzsystem 2 mit einem Steuergerät 3, welches zur Durchführung des im Folgenden noch beschriebenen erfindungsgemäßen Verfahrens ausgebildet ist. Hierzu kommuniziert das Steuergerät 3 mit weiteren hier nur schematisch dargestellten Fahrzeugsystemen 4, insbesondere mit weiteren Fahrerassistenzsystemen, hier einem Navigationssystem, Fahrwerksregelsystemen, hier einem ESP-System, Steuergeräten für den Motor, die Bremsen, die Lenkung und andere Komponenten des Kraftfahrzeugs 1, Sensoren, insbesondere Reibwertsensoren, Fahrbahnsensoren, Umfeldsensoren, usw., und dergleichen. Das Steuergerät 3 hat also Zugriff auf eine Vielzahl von Daten bzw. Informationen, insbesondere jedoch auf technische Daten des Kraftfahrzeugs 1, den aktuellen Fahrzustand beschreibende Messdaten, die Straßenbeschaffenheit beschreibende Messdaten, die Umgebung des Kraftfahrzeugs, insbesondere den Straßenverlauf, beschreibende Daten, sonstige Sensormesswerte, Daten einer Kraftfahrzeug-zu-Kraftfahrzeug-Kommunikationseinrichtung und auch zu die Aufmerksamkeit des Fahrers beschreibenden Werten. Das Steuergerät 3 nutzt diese Vielzahl an Daten, um auf dem Wege einer Informationsfusion verschiedene Werte zu ermitteln, die letztlich zur Ausgabe einer Warnung an einen Fahrer, insbesondere über ein Ausgabemittel 5, führen können.

Konkret wird dabei wenigstens ein den aktuellen physikalischen Grenzbereich des Kraftfahrzeugs beschreibender Grenzwert einer Fahrzustandsgröße sowie ein daraus abgeleiteter, innerhalb des physikalischen Grenzbereichs liegender Warnwert ermittelt. Auch der aktuelle Wert der wenigstens einen Fahrzustandsgröße wird nachverfolgt, und immer dann, wenn der aktuelle Wert der Fahrzustandsgröße zwischen dem Warnwert und dem Grenzwert liegt, wird eine Warnung an den Fahrer über das Ausgabemittel 5, hier ein kontaktanaloges Head-Up-Display, ausgegeben.

Der Warnwert ist dabei fahrerspezifisch und beschreibt den individuellen Grenzbereich des aktuellen Fahrers. Er wird vom Kraftfahrzeug selber ermittelt, nachdem sich der entsprechende Fahrer gegenüber dem Kraftfahrzeug identifiziert hat bzw. das Kraftfahrzeug selber den Fahrer identifiziert, beispielsweise durch entsprechende Sensoren oder einen Authentifizierungscode. Während der normalen Fahrtätigkeit des Fahrers wird dann die Fahrzustandsgröße, die ja ohnehin ständig nachverfolgt wird, insbesondere in Abhängigkeit von und/oder modifiziert durch die aktuelle Fahrsituation, aufgezeichnet und zur Ermittlung des fahrerspezifischen Warnwerts statistisch ausgewertet. Durch Beobachtung des Fahrerverhaltens in verschiedenen Fahrsituationen wird mithin beurteilt, welchen Anteil des tatsächlichen Leistungsspektrums des Kraftfahrzeugs 1, welches durch den physikalischen Grenzbereich beschrieben wird, der Fahrer tatsächlich nutzt - sein individueller Grenzbereich. Beispielsweise kann hier ein situationsabhängiger Mittelwert der Fahrzustandsgröße oder dergleichen ermittelt werden, wobei dann der entsprechende, ja auch situationsspezifische Warnwert entweder durch diesen Mittelwert oder einen anderen statistisch relevanten Wert gebildet wird, wobei jedoch auch denkbar ist, von dem Mittelwert oder dem anderen statistisch relevanten Wert einen bestimmten Betrag abzuziehen/zu addieren oder diesen zu skalieren, um gegebenenfalls noch etwas früher warnen zu können.

Es sei an dieser Stelle angemerkt, dass die Wahl eines fahrerspezifischen Warnwerts auch in Abhängigkeit einer anderen, das Fahrkönnen des Fahrers beschreibenden Größe, sei es eine Eingabe oder ein anderweitig ermittelter Wert, beispielsweise ein Evaluationswert, erfolgen kann.

Auch allgemein können Eingaben des Fahrers mittelbar und/oder unmittelbar berücksichtigt werden. Ein bekanntes Beispiel hierfür sind verschiedene Fahrwerkseinstellungen, beispielsweise auf einen sportlichen oder komfortablen Fahrstil. Transportiert der Fahrer beispielsweise auch seine Familie im Kraftfahrzeug und wählt er einen komfortablen Fahrstil, so ist davon auszugehen, dass er seinen individuellen Grenzbereich vielleicht gar nicht vollständig ausnutzen möchte, so dass der Warnwert entsprechend zu einer früheren Warnung hin verschoben werden kann. Im Gegenteil ist bei der Wahl eines sportlichen Fahrstils anzunehmen, dass der Fahrer sein Können voll ausreizen möchte, so dass eine Warnung hier eher später erfolgen soll und sich dies auch im Warnwert widerspiegeln kann.

Jedoch sind auch weitere Eingaben denkbar, über die der Fahrer den Warnwert mittelbar und/oder unmittelbar beeinflussen kann. Ist dem Fahrer beispielsweise aus dem Radio oder dergleichen bekannt, das schlechte Witterungsbedingungen vorliegen, kann er - gegebenenfalls an einem Bordcomputer oder dergleichen - geeignete Eingaben vornehmen, welche dann ebenso berücksichtigt werden können.

Es sei an dieser Stelle zudem darauf hingewiesen, dass auch ein die Aufmerksamkeit des Fahrers beschreibender Wert berücksichtigt werden kann. Verfahren, mittels denen die Aufmerksamkeit des Fahrers beurteilt werden kann, sind im Stand der Technik bereits bekannt, und ihr Ergebnis kann genutzt werden, um beispielsweise bei unaufmerksamen Fahrern noch früher warnen zu können.

Weitere konkrete Eigenschaften des erfindungsgemäßen Verfahrens sollen im Folgenden am Beispiel der Fig. 2, wobei als Fahrzustandsgrößen die Längsbeschleunigung und die Querbeschleunigung betrachtet werden, dargelegt werden. Selbstverständlich lassen sich die folgenden Ausführungen auch auf andere zu betrachtende Fahrzustandsgrößen, beispielsweise die Geschwindigkeit, übertragen.

Fig. 2 zeigt einen Graphen, in dem Kurven für die entlang der y-Achse aufgetragenen Längsbeschleunigung und die entlang der x-Achse aufgetragene Querbeschleunigung dargestellt sind. Dabei entspricht folglich ein positiver y-Wert einer Beschleunigung, ein negativer y-Wert einem Bremsvorgang. Ein negativer x-Wert steht für eine Querbeschleunigung nach links, ein positiver x-Wert für eine Querbeschleunigung nach rechts. Die äußerste Kurve 6 der Fig. 2 stellt den sogenannten Kammschen Kreis für das Kraftfahrzeug 1 dar, wie er unter Normbedingungen gilt. Die Kurve 6 beschreibt somit einen Normgrenzwert, der für bestimmte Bedingungen zu verwenden ist, vorliegend das Fahren auf einer trockenen und unverschmutzten asphaltierten Straße ohne Berücksichtigung jeglicher weiterer Umwelteinflüsse. Die gestrichelte, darin liegende Kurve 7 zeigt an, wie viel von der durch die Kurve 6 beschriebenen, theoretisch möglichen dynamischen. Leistungsfähigkeit des Kraftfahrzeugs 1 der Fahrer selbst nutzt: Während die Kurve 6 folglich den physikalischen Grenzbereich beschreibt, beschreibt die Kurve 7, die beispielweise durch die bereits diskutierte statistische Auswertung ermittelt werden konnte, den fahrerspezifischen individuellen Grenzbereich des Fahrers unter Normbedingungen. Würde das Kraftfahrzeug beispielsweise eine Beschleunigung von 1 g dynamisch ohne Kontrollverlust handhaben können, nutzt der Fahrer beispielsweise 0,86 g aus. Dies wird hier abgebildet.

Unter den beschriebenen Normbedingungen bildet also der Bereich 8 zwischen den Kurven 6 und 7 den Warnbereich, in dem eine Warnung an den Fahrer über das Ausgabemittel 5 erzeugt wird.

Liegen jedoch äußere Bedingungen vor, die von den Normbedingungen abweichen, werden diese im vorliegenden Ausführungsbeispiel über einen Skalierungswert beschrieben. Solche Umgebungsfaktoren können beispielsweise ungünstige Witterungsbedingungen wie Regen, Eis, usw., eine verschmutzte Fahrbahn, ein schlechterer Reifenzustand, eine abweichende Reifentemperatur, eine bestimmte Zuladung oder dergleichen sein. Ist die Strecke beispielsweise eisglatt, so ergibt sich ein bestimmter Skalierungswert, der zu entsprechend skalierten Kurven 9 und 10 führt. Die Kurve 9 gibt dabei den aktuellen physikalischen Grenzbereich, also aktuell zu verwendende Grenzwerte, wieder. Ebenso stellt die skalierte Kurve 10 den aktuellen individuellen Grenzbereich, also die anzuwendenden Warnwerte, dar. Mithin ergibt sich ein zu weit früheren Zeitpunkten verschobener aktueller Warnbereich 11. Ist die Straße mithin glatt, erfolgt viel früher eine Warnung.

Wie bereits erwähnt, lässt sich das hier dargestellt Konzept der skalierenden Normgrenzwerte und Normwarnwerte selbstverständlich auch auf andere Zustandsgrößen übertragen, bei denen dann Umwelteinflüsse zu entsprechenden Skalierungswerten führen, die beispielsweise berechnet oder einer Look-Up-Tabelle entnommen werden.

Die auszugebende Warnung ist dabei im vorliegenden Ausführungsbeispiel um so intensiver, je näher der/die aktuellen Werte der Fahrzustandsgrößen an dem/den Grenzwerten liegen. So wird beispielsweise am Punkt 12 eine weniger intensive Warnung des Fahrers erfolgen als am Punkt 13. Dem Fahrer wird somit auch bewusst, wie dicht er sich schon am Rand des physikalischen Grenzbereichs befindet.

Zusätzlich ist in diesem Ausführungsbeispiel vorgesehen, dem Fahrer konkrete Anweisungen zu geben, wie er die potentielle Gefahrensituation beenden kann, mithin wie er den aktuellen Warnbereich 11 verlässt. Im Beispiel der Fig. 2 kann ihm beispielsweise über das Ausgabemittel angedeutet werden, die Geschwindigkeit abzusenken oder zu erhöhen bzw. den Lenkwinkel entsprechend anzupassen. Besonders vorteilhaft sind derartige Informationen auf einem Head-Up-Display, welches kontaktanalog ist, ausgebbar. Dem Fahrer kann auch eine zusätzliche Information gegeben werden, wie nahe er schon am physikalischen Grenzbereich ist. Die konkreten Anweisungen, mit denen der Fahrer die potentielle Gefahrensituation beenden kann, können im Übrigen auch in Abhängigkeit des individuellen Fahrkönnens des Fahrers, beispielsweise beschrieben durch seinen individuellen Grenzbereich, ermittelt werden. Doch auch individuelle Reaktionszeiten oder sonstige Eigenschaften des Fahrers, soweit sie im Kraftfahrzeug bekannt und/oder ermittelbar sind, können betrachtet werden. So ist es möglich, im Voraus zu überprüfen, ob der Fahrer unter normalen Umständen zu bestimmten Fahrmanövern, d. h. zur Befolgung bestimmter Anweisungen, überhaupt in der Lage ist. Entsprechend können gegebenenfalls andere Anweisungen gewählt werden, die besser an die Fähigkeiten des individuellen Fahrers angepasst sind.

Es sind jedoch auch komplexere Anweisungsfolgen denkbar, wenn beispielsweise ein Überholvorgang durchgeführt wird und dergleichen und dieser aufgrund einer anstehenden Kurve, die beispielsweise aus einem Navigationssystem bekannt ist, oder einem entgegenkommenden Kraftfahrzeug eher knapp wird. Eine Beschleunigung oder ein Bremsen bzw. Lenkzeitpunkte können dem Fahrer vorgeschlagen werden.

Der Fahrer wird also in jedem Fall angeregt, die potentielle Gefahrensituation zu beseitigen, indem sich die betrachteten Zustandsgrößen des Kraftfahrzeugs 1 wieder außerhalb des Warnbereiches, sozusagen im "grünen" Bereich bewegen.

Hierfür ist vorteilhafterweise zusätzlich vorgesehen, dass das Kraftfahrzeug in Erwartung der Maßnahmen des Fahrers vorkonditioniert wird. So kann das Steuergerät 3 ausgebildet sein, eine Anpassung wenigstens eines Parameters wenigstens eines anderen Fahrzeugsystems im Hinblick auf eine fahrerinitiierte Beseitigung des potentiellen Gefahrenzustands und/oder auf eine Erhöhung der Sicherheit anzupassen. So kann beispielsweise eine Dämpfung der Lenkung verändert werden, die Auslöseschwelle eines Bremsassistenten erniedrigt werden, das Lüftspiel der Bremsen verringert werden und/oder das Fahrwerk des Kraftfahrzeugs auf einen die Situation angepassten beispielsweise härteren, komfortableren oder weicheren, Fahrstil umgestellt werden. Doch auch bezüglich des Sicherheitsaspekts im Falle einer dennoch eintretenden kritischen Situation kann vorgesorgt werden, indem beispielsweise die Rückhaltesysteme, insbesondere Gurtstraffer, Kopfstützen, Sitze oder dergleichen, zur Erhöhung der Sicherheit angesteuert werden.

So wird es dem Fahrer nicht nur erleichtert, die potentielle Gefahrensituation zu beseitigen, sondern es wird auch seine Sicherheit erhöht.

Eine weitere Möglichkeit, im Rahmen des erfindungsgemäßen Verfahrens eine angepasste Vorkonditionierung des Kraftfahrzeugs vornehmen zu können, ist es, die Zahl und/oder Stärke der Warnungen nachzuverfolgen. Wird der Fahrer nämlich beispielsweise übermäßig häufig gewarnt, so kann davon ausgegangen werden, dass er sich in seinem aktuellen Zustand besonders häufig überschätzt, beispielsweise unter dem Einfluss von Alkoholika steht oder dergleichen. In einer anderen Ausgestaltung kann auch die Zeit überwacht werden, die der Fahrer zur Reaktion auf eine Warnung benötigt. Reagiert er eher langsam, ist es möglich, dass er eher unaufmerksam, beispielsweise müde oder dergleichen, ist. Sind derlei Informationen aus dem Warnverhalten und der Reaktion des Fahrers darauf bekannt, so kann auch eine entsprechende Vorkonditionierung der Fahrzeugsysteme, wie dies oben bereits beschrieben wurde, erfolgen, um dem aktuellen Zustand des Fahrers eher gerecht werden zu können. Denkbar ist im Übrigen auch daran, die Warnwerte selber in Abhängigkeit solcher Nachverfolgungsinformationen anzupassen, so dass beispielsweise bei langsamerer Reaktionszeit früher gewarnt wird, beispielsweise ein größerer Wert vom individuellen Grenzbereich des Fahrers abgezogen wird, ab dem eine Warnung vorliegt.

Schließlich kann in einem aktivierbaren oder deaktivierbaren Modus das Steuergerät 3 auch ausgebildet sein, bei Ausgabe einer Warnung einen aktiven, auf die Beseitigung des potentiellen Gefahrenzustands gerichteten Fahreingriff vorzunehmen. Hierzu können ansteuerbare Bremsen, eine ansteuerbare Lenkung und ein ansteuerbares Gaspedal vorgesehen sein, so dass derartige Fahreingriffe denkbar sind. Das Steuergerät 3 ermittelt somit, durch welche Maßnahmen die aktuelle Fahrsituation "entschärft" werden kann, und führt das Kraftfahrzeug - unter gleichzeitiger ständiger Information des Fahrers - wieder in einen sicheren Fahrzustand über, beispielsweise durch Brems- oder Beschleunigungsmaßnahmen oder Lenkvorgänge.

Es sei abschließend noch darauf hingewiesen, dass auch solche automatisch durch das Steuergerät 3 ausgelösten Fahreingriffe unter Berücksichtigung des Fahrkönnens des Fahrers oder anderer Parameter ermittelt werden können. Das Fahrkönnen des Fahrers kann beispielsweise durch den individuellen Grenzbereich des Fahrers oder andere Parameter beschrieben werden. Sonstige relevante Parameter können beispielsweise Eingaben sein, die auf den aktuell gewünschten Fahrstil des Fahrers hinweisen, beispielsweise komfortables Fahren oder dergleichen. Auf diese Weise kann vermieden werden, dass der Fahrer beispielsweise durch zu abrupte Manöver überrascht wird und dergleichen.

## Patentansprüche

1. Verfahren zum Betrieb eines Fahrerassistenzsystems, insbesondere Unfallvermeidungssystems, in einem Kraftfahrzeug,
**dadurch gekennzeichnet,**
**dass** aus technischen Daten des Kraftfahrzeugs, den aktuellen Fahrzustand beschreibenden Messdaten, die Straßenbeschaffenheit beschreibenden Messdaten und die Umgebung des Kraftfahrzeugs, insbesondere den Straßenverlauf, beschreibenden Daten wenigstens ein den aktuellen physikalischen Grenzbereich des Kraftfahrzeugs beschreibender Grenzwert einer Fahrzustandsgröße sowie ein daraus abgeleiteter, innerhalb des physikalischen Grenzbereichs liegender Warnwert ermittelt wird, wobei der aktuelle Wert der wenigstens einen Fahrzustandsgröße ermittelt wird und bei zwischen dem Wamwert und dem Grenzwert liegender Fahrzustandsgröße eine Warnung an einen Fahrer ausgegeben wird, wobei ein allgemeiner, den physikalischen Grenzbereich des Kraftfahrzeugs unter Normbedingungen beschreibender Normgrenzwert ermittelt und/oder vorgegeben wird, wobei der aktuelle Grenzwert durch Skalierung mit einem die aktuelle Fahrsituation beschreibenden Skalierungswert ermittelt wird.

2. Verfahren nach Anspruch 1,
**dadurch gekennzeichnet,**
**dass** als fahrerspezifischer Warnwert ein den individuellen Grenzbereich eines Fahrers beschreibender Grenzwert der Fahrzustandsgröße ermittelt wird.

3. Verfahren nach Anspruch 2,
**dadurch gekennzeichnet,**
**dass** der fährerspezifische Warnwert unter Berücksichtigung einer statistischen Auswertung von Ermittlungen der Fahrzustandsgröße und/oder unter Berücksichtung einer das Fahrkönnen des Fahrers beschreibenden Eingabe ermittelt wird.

4. Verfahren nach einem der vorangehenden Ansprüche,
**dadurch gekennzeichnet,**
**dass** zur Ermittlung des Grenzwerts und/oder des aktuellen Werts der Fahrzustandsgröße und/oder des aktuellen Warnwerts Daten eines Navigationssystems und/oder wenigstens eines Fahrbahnsensors und/oder eines Reibwertsensors und/oder wenigstens eines Umfeldsensors und/oder einer Kraftfahrzeug-zu-Kraftfahrzeug-Kommunikationseinrichtung und/oder wenigstens eines Fahrzeugsystems, insbesondere Fahrwerkregelsystems und/oder Fahrerassistenzsystems und/oder Steuergeräts, und/oder Beschleunigungssensoren berücksichtigt werden.

5. Verfahren nach einem der vorangehenden Ansprüche,
**dadurch gekennzeichnet,**
**dass** bei der Ermittlung des aktuellen Warnwerts ein die Aufmerksamkeit des Fahrers beschreibender Wert berücksichtigt wird.

6. Verfahren nach einem der vorangehenden Ansprüche,
**dadurch gekennzeichnet,**
**dass** als Fahrzustandsgröße die Geschwindigkeit und/oder der Lenkwinkel und/oder die Längsbeschleunigung und/oder die Querbeschleunigung des Kraftfahrzeugs betrachtet werden.

7. Verfahren nach einem der vorangehenden Ansprüche,
**dadurch gekennzeichnet,**
**dass** auch ein auf Normbedingungen bezogener Normwamwert mit dem Skalierungswert skaliert wird.

8. Verfahren nach einem der vorangehenden Ansprüche,
**dadurch gekennzeichnet,**
**dass** der Skalierungsfaktor unter Berücksichtigung von die aktuelle Witterung und/oder den Reifenzustand und/oder die Reifentemperatur und/oder die Zuladung und/oder den Reibwert beschreibenden Daten ermittelt wird.

9. Verfahren nach einem der vorangehenden Ansprüche,
**dadurch gekennzeichnet,**
**dass** die Warnung in Abhängigkeit des Abstandes zwischen dem Grenzwert und dem aktuellen Wert der Fahrzustandsgröße verändert wird.

10. Verfahren nach einem der vorangehenden Ansprüche,
**dadurch gekennzeichnet,**
**dass** die Warnung über ein akustisches und/oder optisches und/oder haptisches und/oder olfaktorisches Ausgabemittel, insbesondere über ein Head-Up-Display, ausgegeben wird.

11. Verfahren nach einem der vorangehenden Ansprüche,
**dadurch gekennzeichnet,**
**dass** die Warnung auch eine Information zur Beseitigung des potentiellen Gefahrenzustands umfasst.

12. Verfahren nach einem der vorangehenden Ansprüche,
**dadurch gekennzeichnet,**
**dass** bei Ausgabe einer Warnung auch eine Anpassung wenigstens eines Parameters wenigstens eines anderen Fahrzeugsystems im Hinblick auf eine fahrerinitiierte Beseitigung des potentiellen Gefahrenzustands und/oder auf eine Erhöhung der Sicherheit erfolgt.

13. Verfahren nach Anspruch 12,
**dadurch gekennzeichnet,**
**dass** eine Momentenunterstützung und/oder Übersetzung der Lenkung verändert wird und/oder die Auslöseschwelle eines Bremsassistenten verändert, insbesondere erniedrigt wird und/oder das Lüftspiel der Bremsen verringert wird und/oder das Fahrwerk des Kraftfahrzeugs auf einen der Situation angepassten Fahrstil umgestellt wird.

14. Verfahren nach Anspruch 12 oder 13,
**dadurch gekennzeichnet,**
**dass** aktive Rückhaltesysteme, insbesondere Gurtstraffer und/oder Kopfstützen und/oder Sitze, zur Erhöhung der Sicherheit angesteuert werden.

15. Verfahren nach einem der vorangehenden Ansprüche,
**dadurch gekennzeichnet,**
**dass** bei Ausgabe einer Warnung seitens des Fahrerassistenzsystems ein eigenständiger oder unterstützender, aktiver, auf die Beseitigung des potentiellen Gefahrenzustands gerichteter Fahreingriff vorgenommen wird, insbesondere durch Ansteuerung der Bremsen und/oder der Lenkung und/oder des Gaspedals.

16. Kraftfahrzeug (1), umfassend ein Fahrerassistenzsystem (2) mit einem Steuergerät (3), welches zur Durchführung des Verfahrens nach einem der vorangehenden Ansprüche ausgebildet ist.

## Claims

1. Method for operating a driver assistance system, in particular an accident avoidance system, in a motor vehicle, **characterised in that** from technical data of the motor vehicle, measurement data describing the current driving state, measurement data describing the road conditions and data describing the surroundings of the motor vehicle, in particular the course of the road, at least one limit value of a driving state variable describing the current physical limits of the motor vehicle and a warning value lying within the physical limits derived therefrom is determined, wherein the current value of the at least one driving state variable is determined and a warning is sent to a driver when the driving state variable lies between the warning value and the limit value, wherein an overall standard limit value is determined and/or specified, describing the physical limits of the motor vehicle under standard conditions, wherein the current limit value is determined through scaling by a scaling value describing the current driving situation.

2. Method according to claim 1, **characterised in that** a limit value of the driving state variable describing the individual limits of a driver is determined as a driver specific warning value.

3. Method according to claim 2, **characterised in that** the driver specific warning value is determined taking account of a statistical evaluation of determinations of the driving state variable and/or taking account of an input describing the driving abilities of the driver.

4. Method according to one of the preceding claims, **characterised in that** in order to determine the limit value and/or the current value of the driving state variable and/or the current warning value, data from a navigation system and/or at least one roadway sensor and/or one friction sensor and/or at least one surroundings sensor and/or one motor vehicle to motor vehicle communication device and/or at least one vehicle system, in particular a chassis control system and/or driver assistance system and/or control devices and/or acceleration sensors are considered.

5. Method according to one of the preceding claims, **characterised in that** when determining the current warning value a value describing the attention of the driver is considered.

6. Method according to one of the preceding claims, **characterised in that** the speed and/or angle of steering and/or longitudinal acceleration and/or transverse acceleration of the motor vehicle is treated as the driving state variable.

7. Method according to one of the preceding claims, **characterised in that** a standard warning value relating to the standard conditions can also be scaled by the scaling value.

8. Method according to one of the preceding claims, **characterised in that** the scaling factor is determined taking account of data describing the current weather and/or the state of the tyres and/or the tyre temperature and/or the vehicle load capacity and/or the friction value.

9. Method according to one of the preceding claims, **characterised in that** the warning is changed depending on the distance between the limit value and the current value of the driving state variable.

10. Method according to one of the preceding claims, **characterised in that** the warning is emitted via an acoustic and/or optical and/or haptic and/or olfactory output means, in particular via a head-up display.

11. Method according to one of the preceding claims, **characterised in that** the warning also includes information for elimination of the potential danger condition.

12. Method according to one of the preceding claims, **characterised in that** on output of a warning, there is also an adjustment of at least one parameter of at least one other vehicle system with regard to a driver initiated elimination of the potential danger condition and/or an increase in safety.

13. Method according to claim 12, **characterised in that** a torque boost and/or transmission of the steering is changed and/or the trigger threshold of a braking assistance is changed, in particular lowered, and/or the air gap of the brakes is reduced and/or the chassis of the motor vehicle is shifted to a driving style matching the situation.

14. Method according to claim 12 or 13, **characterised in that** active restraint systems, in particular seatbelt tensioners and/or head restraints and/or seats, are actuated to increase safety.

15. Method according to one of the preceding claims, **characterised in that** on output of a warning by the driver assistance system, an autonomous or supportive active driving intervention is performed, directed at eliminating the potential danger situation, in particular through activation of the brakes and/or the steering and/or accelerator pedal.

16. Motor vehicle (1), comprising a driver assistance system (2) with a control device (3) which is designed to perform the method according to one of the preceding claims.

## Revendications

1. Procédé de fonctionnement d'un système d'assistance au conducteur, notamment un système pour éviter des accidents, dans un véhicule automobile,
**caractérisé en ce que**, à partir de données techniques du véhicule automobile, de données de mesure décrivant l'état actuel de roulage, de données de mesure décrivant l'état des routes et de données décrivant l'environnement du véhicule automobile, notamment l'allure de la route, on détermine au moins une valeur limite, décrivant la plage limite physique actuelle du véhicule automobile, d'une grandeur d'état de roulage ainsi qu'une valeur d'avertissement déduite de ceci et située à l'intérieur de la plage limite physique, la valeur actuelle de l'au moins une grandeur d'état de roulage étant déterminée et, en présence d'une grandeur d'état de roulage comprise entre la valeur d'avertissement et la valeur limite, un avertissement étant fourni à un conducteur, une valeur limite normale générale qui décrit la plage limite physique du véhicule automobile du véhicule automobile dans des conditions normales étant déterminée et/ou prescrite, la valeur limite actuelle étant déterminée par redimensionnement avec une valeur de redimensionnement qui décrit la situation de roulage actuelle.

2. Procédé selon la revendication 1, **caractérisé en ce que**, comme valeur d'avertissement spécifique au conducteur, on détermine une valeur limite, décrivant la plage limite individuelle d'un conducteur, de la grandeur d'état de roulage.

3. Procédé selon la revendication 2, **caractérisé en ce que** l'on détermine la valeur d'avertissement spécifique au conducteur en tenant compte d'une évaluation statistique de déterminations de la grandeur d'état de roulage et/ou en tenant compte d'une entrée décrivant les capacités de pilotage du conducteur.

4. Procédé selon l'une des revendications précédentes, **caractérisé en ce que**, pour la détermination de la valeur limite et/ou de la valeur actuelle de la grandeur d'état de roulage et/ou de la valeur d'avertissement actuelle, on prend en compte des données d'un système de navigation, d'au moins un capteur de chaussée et/ou d'un capteur de coefficient de frottement et/ou d'au moins un capteur d'environnement et/ou d'un dispositif de communication de véhicule automobile à véhicule automobile et/ou d'au moins un système de véhicule, notamment d'un système de contrôle de châssis et/ou d'un système d'assistance au conducteur et/ou d'un appareil de commande, et/ou de capteurs d'accélération.

5. Procédé selon l'une des revendications précédentes, **caractérisé en ce que**, lors de la détermination de la valeur d'avertissement actuelle, on prend en compte une valeur décrivant la vigilance du conducteur.

6. Procédé selon l'une des revendications précédentes, **caractérisé en ce que**, comme grandeur d'état de roulage, on considère la vitesse et/ou l'angle de braquage et/ou l'accélération longitudinale et/ou l'accélération transversale du véhicule automobile.

7. Procédé selon l'une des revendications précédentes, **caractérisé en ce que** l'on redimensionne aussi avec une valeur de redimensionnement une valeur d'avertissement normale se rapportant à des conditions normales.

8. Procédé selon l'une des revendications précédentes, **caractérisé en ce que** l'on détermine le facteur de redimensionnement en prenant en compte des données décrivant les conditions météorologiques actuelles et/ou l'état des pneus et/ou la température des pneus et/ou la charge et/ou le coefficient de frottement.

9. Procédé selon l'une des revendications précédentes, **caractérisé en ce que** l'on modifie l'avertissement en fonction de l'écart entre la valeur limite et la valeur actuelle de la grandeur d'état de roulage.

10. Procédé selon l'une des revendications précédentes, **caractérisé en ce que** l'on délivre l'avertissement par l'intermédiaire d'un moyen de sortie acoustique et/ou optique et/ou tactile et/ou olfactif, notamment par l'intermédiaire d'un affichage tête haute.

11. Procédé selon l'une des revendications précédentes, **caractérisé en ce que** l'avertissement comprend aussi une information pour écarter l'état de risque potentiel.

12. Procédé selon l'une des revendications précédentes, **caractérisé en ce que**, lors de la délivrance d'un avertissement, on effectue aussi une adaptation d'au moins un paramètre d'au moins un autre système de véhicule en vue d'une élimination, déclenchée par le conducteur, de l'état de risque potentiel et/ou d'une augmentation de la sécurité.

13. Procédé selon la revendication 12, **caractérisé en ce que** l'on modifie une assistance de couples et/ou une démultiplication de direction et/ou on modifie, notamment on diminue, le seuil de déclenchement d'une assistance de freinage et/ou on réduit le jeu des freins et/ou on règle le châssis du véhicule automobile sur un style de roulage adapté à la situation.

14. Procédé selon la revendication 12 ou 13, **caractérisé en ce que** l'on commande des systèmes de retenue actifs, notamment des pré-tendeurs de ceintures et/ou des appuie-têtes et/ou des sièges, pour augmenter la sécurité.

15. Procédé selon l'une des revendications précédentes, **caractérisé en ce que**, lors de la délivrance d'un avertissement, il s'effectue du côté du système d'assistance au conducteur une intervention de conduite, autonome ou d'assistance, active, axée sur l'élimination de l'état de risque potentiel, notamment via la commande des freins et/ou de la direction et/ou de la pédale d'accélérateur.

16. Véhicule automobile (1), comprenant un système d'assistance au conducteur (2) avec un appareil de commande (3), qui est conçu pour la mise en oeuvre du procédé selon l'une des revendications précédentes.
